# EUROPÄISCHE PATENTSCHRIFT

(11) **EP 2 268 444 B1**
(45) Veröffentlichungstag und Bekanntmachung des Hinweises auf die Patenterteilung: **25.05.2016**
(21) Anmeldenummer: 09735625.7
(22) Anmeldetag: 19.03.2009
(51) Int. Cl.: B23K 9/095

(54) **VERFAHREN ZUM REGELN EINES SCHWEIßGERÄTES**
METHOD FOR CONTROLLING A WELDER
PROCÉDÉ DE RÉGLAGE D'UN APPAREIL DE SOUDAGE

(30) Priorität: 21.04.2008 AT 6342008
(43) Veröffentlichungstag der Anmeldung: 05.01.2011
(73) Patentinhaber: Fronius International GmbH, 4643 Pettenbach (AT)
(72) Erfinder: KAZMAIER, Jörg, A-4600 Thalheim bei Wels (AT); HASELSTEINER, Marco, A-4600 Wels (AT); SCHAUER, Andreas, A-4081 Hartkirchen (AT); TRAUNER, Gernot, A-4611 Buchkirchen (AT)
(74) Vertreter: Sonn & Partner Patentanwälte
(86) Internationale Anmeldenummer: PCT/AT2009/000115
(87) Internationale Veröffentlichungsnummer: WO 2009/129551

(56) Entgegenhaltungen:
- EP-A- 1 559 496
- EP-A- 1 609 554
- EP-B- 1 098 729

## Beschreibung

Die Erfindung betrifft ein Verfahren zur Regelung eines Schweißgerätes mit einer abschmelzenden Elektrode, wobei die für einen Schweißprozess benötigten Werte der Schweißparameter in einer Speichervorrichtung hinterlegt werden und in Form von sogenannten Kennlinien durch zumindest einen Stützpunkt pro Kennlinie abgespeichert werden.

Allgemein ist aus dem Stand der Technik bekannt, dass für eine Schweißanwendung eine Vielzahl von Schweißparametern an einem Schweißgerät eingestellt werden kann, aus welchen der optimale Arbeitspunkt zusammengesetzt wird. Um dies für den Benutzer des Schweißgerätes zu erleichtern, werden mehrere Arbeitspunkte als sogenannte Stützpunkte in Form von Einzelpunkten einer Kennlinie abgespeichert. Dadurch wird für den Benutzer erreicht, dass dieser im Wesentlichen durch Verändern der Schweißparameter wie Schweißstrom, Schweißspannung und Drahtvorschubgeschwindigkeit den Arbeitspunkt auf der Kennlinie verschieben kann.

Da mit einem Schweißgerät eine Vielzahl von Schweißanwendungen durchgeführt werden können, ist eine entsprechend große Anzahl von Kennlinien für gleichen Grundwerkstoff des Werkstücks, Durchmesser des Zusatzwerkstoffs, Schutzgas, usw. durch jeweils mehrere Stützpunkte in einer Speichervorrichtung des Schweißgerätes abgespeichert - beim selben Werkstoff. Somit kann der Benutzer entsprechend der Schweißanwendung eine geeignete Kennlinie auswählen. Eine Schweißanwendung ist dabei nicht mit einem Schweißprozess gleichzusetzen, sondern vielmehr insbesondere vom Material des Werkstücks sowie des Zusatzwerkstoffs und der Schweißart (Kehlnaht, V-Naht, Stumpfnaht, etc.) abhängig. Dadurch müssen pro Schweißprozess (Puls, Standard-Kurzlichtbogen, CMT - Cold Metal Transfer, etc.) eine Vielzahl von Schweißanwendungen abgedeckt werden.

Aus der EP 1 098 729 B1 ist des weiteren bekannt, dass bei Aufruf oder Einstellung eines Schweißparameters zwischen einer Minimum- und Maximum-Kurve die Steuervorrichtung über ein Berechnungsverfahren, insbesondere über eine Interpolation, die Soll-Werte der weiteren Schweißparameter dieses Schweißverfahrens ermittelt werden. Durch das Interpolationsverfahren werden die zwischen der Minimum- und Maximum-Kurve liegenden weiteren Kurven ermittelt, mit denen anschließend der Schweißprozess durchgeführt wird. Es werden also lediglich zwei Kennlinien, die Minimum- und Maximum-Kurve, für einen Schweißprozess abgespeichert, und die dazwischen liegenden Kennlinien interpoliert. Letztendlich wird, wie aus dem allgemeinen Stand der Technik bekannt, jeweils eine Kennlinie herangezogen, auf welcher der Benutzer den Arbeitspunkt verschieben kann.

Nachteilig ist hierbei, dass pro Schweißanwendung im Wesentlichen eine Kennlinie erforderlich ist. Derartige Kennlinien werden allerdings in den meisten Fällen nicht vom Benutzer erstellt, sondern vom Hersteller des Schweißgerätes zur Verfügung gestellt bzw. auf Anfrage des Benutzers individuell für die jeweilige Schweißanwendung angefertigt. Der Grund dafür liegt auch darin, dass der Benutzer meist nicht auf sämtliche Schweißparameter, welche zur Erstellung einer Kennlinie bzw. derer Stützpunkte erforderlich sind, zugreifen kann. Dementsprechend ist jede Kennlinie mit Zeit und Kosten verbunden. Ändert sich nun eine Schweißanwendung geringfügig, kann in den meisten Fällen mit der für diese Schweißanwendung erstellten Kennlinie kein optimales Schweißergebnis, hauptsächlich in Bezug auf einen Wärmeeintrag in das Werkstück und einen sogenannten Füllgrad (also die Optik der Schweißraupe), mehr erzielt werden. Dies ist darauf zurückzuführen, dass bei Anpassungen des Arbeitspunktes dieser stets auf der Kennlinie verläuft und sich die Schweißparameter, wie die Drahtvorschubgeschwindigkeit, der Schweißstrom und die Schweißspannung, in gegenseitiger Abhängigkeit ändern. Insbesondere ändert sich der Wärmeeintrag in das Werkstück, sobald der Arbeitspunkt auf der Kennlinie verschoben wird. Infolgedessen können die gestellten Anforderungen an die Schweißverbindung, insbesondere an den Füllgrad und den Einbrand (welcher dem Wärmeeintrag entspricht), nicht erreicht werden. Somit wäre für die geringfügig geänderte Schweißanwendung eine eigene Kennlinie erforderlich.

Die Aufgabe der Erfindung liegt in der Schaffung eines oben genannten Verfahrens, mit dem der Arbeitspunkt anhand von zwei voneinander unabhängigen Schweißparametern eingestellt werden kann.

Die Aufgabe der Erfindung wird dadurch gelöst, dass ein Arbeitspunkt durch einen Wert für den Wärmeeintrag in ein Werkstück und einen Wert für die Drahtvorschubgeschwindigkeit eingestellt wird, wobei bei Anpassung eines dieser Werte an eine Schweißanwendung der weitere Wert durch ein Berechnungsverfahren konstant gehalten wird und das Berechnungsverfahren darauf aufgebaut wird, dass pro Schweißprozess mehrere zueinander kompatible Kennlinien jeweils zu einem Kennlinienfeld zusammengefasst werden und die Schweißparameter aller Stützpunkte der Kennlinien der Kennlinienfelder nach definierten Werten bestimmter Schweißparameter abgespeichert werden.

Vorteilhaft ist hierbei, dass der Anwender im Wesentlichen durch Verändern von lediglich zwei Werten seinen Arbeitspunkt durch eine genaue und unabhängige Justierung von Füllgrad und Wärmeeintrag in das Werkstück einstellen kann. Somit ist es nicht mehr erforderlich, dass der Anwender eine auf eine spezielle Schweißanwendung angepasste Kennlinie erstellen muss. Dies ist darauf zurückzuführen, dass die weiteren für einen Arbeitspunkt erforderlichen Werte der Schweißparameter an die vom Benutzer verstellten Werte automatisch angepasst werden. Somit kann der Anwender Arbeitspunkte einstellen, welche mit aus dem Stand der Technik bekannten Verfahren nur durch Verändern einer Vielzahl von Schweißparametern eingestellt werden könnten. Dazu wäre allerdings ein tiefgründiges schweißtechnisches Hintergrundwissen bzw. wären detaillierte Hintergrundkenntnisse des Anwenders erforderlich, welche beim erfindungsgemäßen Verfahren entfallen können.

Eine derart einfache Einstellung des Arbeitspunktes ist auch für den Schweißgerätehersteller von Vorteil, da eine komplizierte Erklärung der Zusammenhänge der Vielzahl von verschiedenen Schweißparametern für einen Arbeitspunkt überflüssig wird. Ebenso kann dadurch die Ein-/Ausgabeeinheit des Schweißgerätes sehr einfach und übersichtlich gestaltet werden, da eine komplexe Menüführung entfallen kann.

Ein wesentlicher Vorteil liegt auch darin, dass nunmehr die Möglichkeit geschaffen wird, dass mit entsprechenden Probeschweißungen zuerst ein Wert der beiden Schweißparameter ermittelt wird, worauf der weitere Wert beliebig dazu eingestellt wird. Beispielsweise wird zuerst der Wert für den Wärmeeintrag, der nur mit entsprechenden Schliffen kontrolliert werden kann, ermittelt, worauf der Benutzer nunmehr nach seinem Ermessen den Füllgrad, also die Höhe der Schweißraupe, über die Drahtvorschubgeschwindigkeit festlegen kann, ohne dass sich dadurch der Wärmeeintrag, also der sogenannte Einbrand ins Material des Werkstückes, verändert. Somit können weitere Schliffe eingespart werden.

Auch ist von Vorteil, dass die Stützpunkte der einzelnen Kennlinien unabhängig voneinander verwendet werden können.

Durch die Maßnahmen, dass die Schweißparameter der Stützpunkte für unterschiedliche Werte für den Wärmeeintrag in das Werkstück bei jeweils einem konstanten Wert der Drahtvorschubgeschwindigkeit abgespeichert werden und dass die Kennlinienfelder aus einem Puls-Schweißprozess, einem CMT-Schweißprozess und einem Negativ-gepolten-Schweißprozess gebildet werden, kann in vorteilhafter Weise die Wärmeeinbringung in das Werkstück über einen weiten Bereich variiert werden.

Von Vorteil ist auch, dass die Kennlinienfelder der einzelnen Schweißprozesse zu einem gemeinsamen Gesamtkennlinienfeld gekoppelt werden, wodurch eine exakte, fein justierbare Einstellung des Arbeitspunktes im Gesamtkennlinienfeld möglich ist.

In vorteilhafter Weise wird durch die Maßnahme, dass mit dem Berechnungsverfahren ein Hilfspunkt aus mehreren Stützpunkten ermittelt wird, erreicht, dass diese Hilfspunkte in weiterer Folge wie die Stützpunkte zur Ermittlung des Arbeitspunktes herangezogen werden können.

Durch die Maßnahmen gemäß den Ansprüchen 6 bis 11 kann auch sozusagen Kennlinienfelder-übergreifend interpoliert werden bzw. können Arbeitspunkte gefunden werden und die Wärmeeinbringung und der Füllgrad zwischen den Kennlinienfeldern eingestellt werden. Ebenso wird dadurch eine nahezu lückenlose Kopplung der Kennlinienfelder mit jeweils unterschiedlichen Schweißprozessen ermöglicht.

Die vorliegende Erfindung wird anhand der beigefügten, schematischen Zeichnungen näher erläutert. Darin zeigen:
Fig. 1 mehrere Kennlinien eines Schweißprozesses in schematischer Darstellung;
Fig. 2 das Gesamtkennlinienfeld für das erfindungsgemäße Verfahren;
Fig. 3 das Gesamtkennlinienfeld mit gemischten Kennlinien und der Arbeitspunktverschiebung;
Fig. 4 das Gesamtkennlinienfeld mit der Arbeitspunktverschiebung nach einer zweiten Methode.

Einführend wird festgehalten, dass gleiche Teile des Ausführungsbeispiels mit gleichen Bezugszeichen versehen werden.

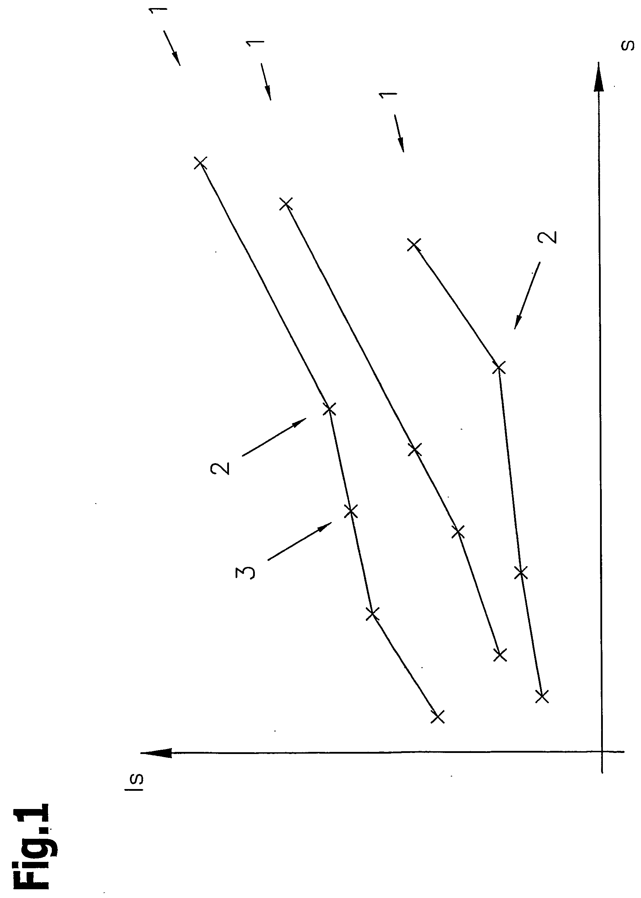

In Fig. 1 sind mehrere Kennlinien 1 des Schweißstroms Is in Abhängigkeit der Stärke s des Werkstücks eines Schweißprozesses mit abschmelzender Elektrode - also einem Schweißdraht - dargestellt. Beispielsweise können drei Kennlinien zu einem CMT-Schweißprozess abgespeichert werden. Das Speichern der Kennlinien 1 erfolgt dabei durch zumindest einen Stützpunkt 2 pro Kennlinie 1. Die Stützpunkte 2 beinhalten dabei sämtliche Schweißparameter, welche für einen Schweißprozess erforderlich sind. Somit entspricht ein Stützpunkt 2 auch einem Arbeitspunkt 3 für einen Schweißprozess, wenn vom Anwender exakt diese Schweißparameter eingestellt werden. Ansonsten befindet sich der Arbeitspunkt 3 auf einer der Kennlinien 1.

Bei einem CMT-Schweißprozess werden beispielsweise je nach Schweißanwendung etwa fünfzehn bis fünfzig Schweißparameter pro Stützpunkt 2 abgespeichert. Für den Anwender des Schweißprozesses sind davon insbesondere der mittlere Schweißstrom, die mittlere Schweißspannung, die mittlere Drahtvorschubgeschwindigkeit, das Material eines Werkstücks, die Stärke des Werkstücks und das Schutzgas von Bedeutung. Durch Einstellung dieser Schweißparameter ergibt sich der Arbeitspunkt 3 auf einer Kennlinie 1, welche demnach der Schweißanwendung entspricht. Durch Verändern dieser Schweißparameter kann der Anwender nun einen Arbeitspunkt 3 des Schweißprozesses auf dieser Kennlinie 1 verschieben, sodass die gewünschte Qualität des Schweißprozesses bzw. die Anforderungen an die Schweißanwendung mit dem Schweißprozess erreicht wird. Beispielsweise wird eine Schweißanwendung anhand der Nahtform (z.B. Kehlnaht), der Nahtüberhöhung bzw. dem Füllgrad, dem Einbrand, der Schuppung und der Randkerben eingestellt.

Wie aus dem Diagramm ersichtlich, kann der Arbeitspunkt 3 anhand der Schweißparameter mittlerer Schweißstrom Is und der Stärke s des Werkstücks entlang einer Kennlinie 1 eingestellt bzw. angepasst werden. Die Mittelwerte der Schweißparameter ergeben sich dabei daraus, dass für unterschiedliche Phasen eines Schweißprozesses unterschiedliche Werte für einen Schweißparameter abgespeichert werden, um einen Schweißprozess optimal einstellen zu können. Wird der Arbeitspunkt 3 zwischen zwei Stützpunkten 2 einer Kennlinie 1 gewählt, werden sämtliche weitere Schweißparameter entsprechend interpoliert. Da die Kennlinien 1, außer die Standard-Kennlinien, meist nach den Anforderungen des Anwenders erstellt und abgespeichert werden, sind die Stützpunkte 2 entsprechend auf den jeweiligen Kennlinien 1 unregelmäßig verteilt. Dies hat zur Folge, dass eine Interpolation zwischen Stützpunkten 2 zweier Kennlinien 1 schweißtechnisch nicht sinnvoll ist. Das heißt, dass kein richtiger Werkstoffübergang stattfindet, sodass beispielsweise der Schweißdraht mit einem zu hohen Strom das Schmelzbad berührt oder der Schweißdraht bis zum Kontaktrohr zurückbrennt. Im schlimmsten Fall ist es auch möglich, dass der Schweißprozess erliegt oder nicht startet. Wählt der Anwender beispielsweise einen Arbeitspunkt 3, welcher zwischen zwei Kennlinien 1 liegt - also abweichend von vorhandenen Kennlinien 1 gewählte Verbindungen verlangt - ist es für eine qualitativ hochwertige Schweißung erforderlich, eine neue Kennlinie 1 zu erstellen. Nur dadurch können die Anforderungen an den Füllgrad sowie den Einbrand erfüllt werden.

Eine neue Kennlinie 1 hat allerdings für den Anwender zufolge, dass dieser darauf warten muss, da die Kennlinie 1 zuerst vom Hersteller des Schweißgerätes erstellt werden muss. Dementsprechend ist eine derartige Wartezeit mit Kosten verbunden. Des Weiteren wird dadurch der Aufwand für Versuche von neuen Schweißanwendungen deutlich erhöht. Insbesondere dann, wenn die erstellte Kennlinie 1 nicht den Anforderungen an die Schweißverbindung entspricht und nochmalig eine Kennlinie 1 erstellt werden muss. Hierbei ist also die Flexibilität in Bezug auf die Auswahl eines Arbeitspunktes 3 für den Schweißprozess sehr eingeschränkt.

Erfindungsgemäß ist daher vorgesehen, dass der Anwender nun zumindest über Kennlinien 1 hinweg den Arbeitspunkt 3 einstellen kann, indem der Arbeitspunkt 3 durch einen mittleren Wert für den Wärmeeintrag Pw in das Werkstück und der mittleren Drahtvorschubgeschwindigkeit vd eingestellt wird, wobei bei Anpassung eines dieser Werte an die Schweißanwendung der weitere Wert durch ein Berechnungsverfahren konstant gehalten wird. Dadurch wird für den Anwender die Möglichkeit geschaffen, den Wärmeeintrag Pw in das Werkstück exakt einzustellen, indem die dafür benötigten Werte der Schweißparameter von unterschiedlichen Stützpunkten 2 verwendet werden können.

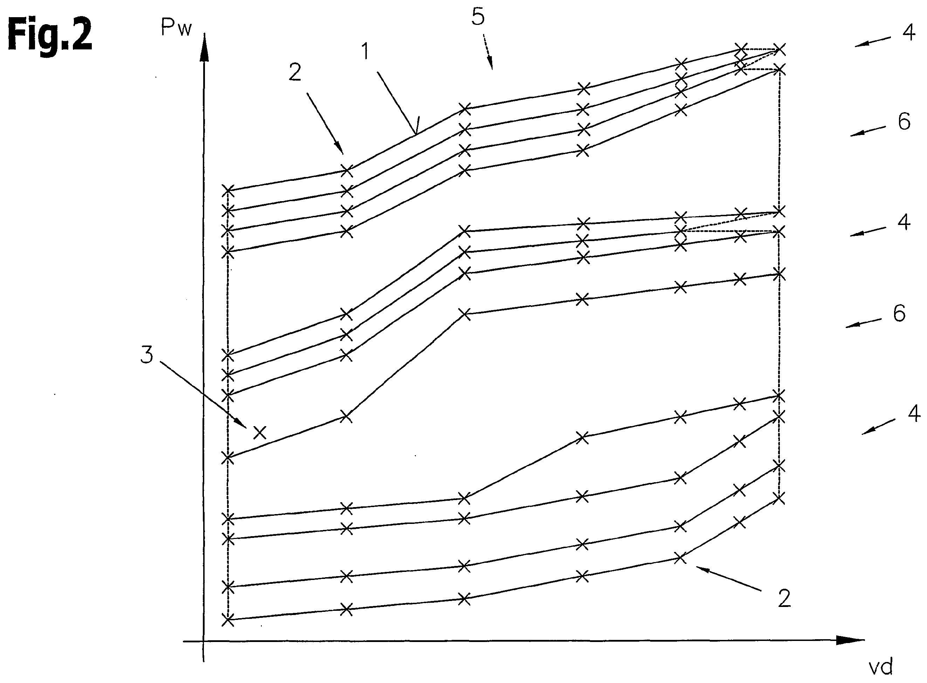

Im Detail ist die Einstellung des Arbeitspunktes 3 für eine Schweißanwendung nun anhand der Fig. 2 bis 4 beschrieben.

Aus Fig. 2 ist ersichtlich, dass drei Kennlinienfelder 4 in einem Diagramm dargestellt sind. Hierzu sei erwähnt, dass die Erfindung selbstverständlich nicht auf drei Kennlinienfelder 4 begrenzt ist. Dabei wird das Diagramm durch die Einstellwerte des mittleren Wärmeeintrags Pw in das Werkstück in y-Richtung und die mittlere Drahtvorschubgeschwindigkeit vd in x-Richtung gebildet. Über diese Einstellwerte kann der Anwender an einer Bedienfront eines Schweißgerätes den Arbeitspunkt 3 für die entsprechende Schweißanwendung einstellen. Der Einstellbereich wird dabei durch die Kennlinienfelder 4 und zumindest einen Mischbereich 6, welche zu einem Gesamtkennlinienfeld 5 gekoppelt sind, gebildet. Erfindungsgemäß kann also der Arbeitspunkt 3 in diesem Gesamtkennlinienfeld 5 - strichliert dargestellt - flexibel eingestellt werden. Dabei ist eine Veränderung des Arbeitspunktes 3 nicht an eine Kennlinie 1 gebunden, sondern es kann einer der Einstellwerte konstant gehalten werden, wenn der weitere Einstellwert verändert wird.

Die einzelnen Kennlinienfelder 4 werden zwar durch mehrere Kennlinien 1 eines Schweißprozesses gebildet, dienen aber lediglich als Basis für das Berechnungsverfahren. Das heißt, dass ähnlich wie beim Stand der Technik jede Kennlinie 1 in Form von mehreren Stützpunkten 2 abgespeichert ist.

Für eine neue Schweißanwendung stellt nun der Anwender im Wesentlichen den Arbeitspunkt 3 nach Erfahrungswerten ein und macht eine Probeschweißung. Anhand dieser kann der Anwender dann beurteilen, ob mit dem eingestellten Arbeitspunkt 3 die Anforderungen an die Schweißverbindung, insbesondere an den Einbrand bzw. den Wärmeeintrag Pw in das Werkstück und den Füllgrad (Form der Schweißnaht), erreicht wurden. Dies wird üblicherweise visuell, metallographisch (Schliff), durch eine Zugprobe und/oder ähnlichen Prüfungsverfahren durchgeführt. Bei einem Schliff wird die Schweißnaht durchgeschnitten, sodass der Einbrand beurteilt werden kann.

Das Ergebnis der Beurteilung kann nun derart lauten, dass der Wärmeeintrag Pw den Anforderungen entspricht und der Füllgrad optimiert werden muss. Das bedeutet also, dass der eingestellte Wert für den Wärmeeintrag Pw nicht verändert werden soll und der Wert für den Füllgrad, also im Wesentlichen die mittlere Drahtvorschubgeschwindigkeit vd, erhöht werden soll. Dies erfolgt für den Anwender in einfacher Weise derart, dass dieser lediglich den Wert für die mittlere Drahtvorschubgeschwindigkeit vd verändert und der Wert für den Wärmeeintrag Pw automatisch konstant gehalten wird. Im Vergleich dazu, bewirkt eine Veränderung des Arbeitspunktes 3 im Stand der Technik, dass dieser auf der Kennlinie 1 verschoben wird, wodurch automatisch durch Verändern von einem Schweißparameter oder Einstellwert der weitere bzw. die weiteren Werte ebenfalls angepasst bzw. verändert werden.

Damit nun erfindungsgemäß einer der Einstellwerte konstant gehalten werden kann, ist im Hintergrund das Berechnungsverfahren verantwortlich, welches nun im Detail beschrieben wird:

Grundvoraussetzung für das Berechnungsverfahren ist dabei, dass die Schweißparameter aller Stützpunkte 2 der Kennlinien 1 der Kennlinienfelder 4 nach definierten Werten bestimmter Schweißparameter abgespeichert werden. Das heißt, wie auch aus den Stützpunkten 2 des Gesamtkennlinienfeldes 5 ersichtlich, dass beispielsweise bei mehreren definierten Werten der mittleren Drahtvorschubgeschwindigkeit vd die weiteren Schweißparameter und der Wärmeeintrag Pw in das Werkstück aufgenommen werden. Wie aus dem Diagramm ersichtlich, wurden in diesem Fall die Stützpunkte 2 jeder Kennlinie 1 bei sieben Werten für die mittlere Drahtvorschubgeschwindigkeit vd aufgenommen und abgespeichert. Dadurch wird auch erreicht, dass die Kennlinien 1 innerhalb eines Kennlinienfeldes 4 zueinander kompatibel sind. Im Wesentlichen heißt das, dass zwischen Stützpunkten 2 zweier Kennlinien 1 eines Kennlinenfeldes 4 der Arbeitspunkt 3 interpoliert werden kann und die Anforderungen an die Schweißverbindung erfüllt werden. Eine derartige Interpolation ist allerdings nur zwischen den Kennlinien 1 eines Kennlinienfeldes 4, welches einen sogenannten reinen Schweißprozess, wie einen CMT-Schweißprozess, Puls-Schweißprozess oder Negativ-gepolten-Schweißprozess repräsentiert, möglich. Für eine Verschiebung des Arbeitspunktes 3 über Kennlinien 1 und Schweißprozesse hinweg ist des Weiteren zwischen den Kennlinienfeldern 4 jeweils ein Mischbereich 6 erforderlich, sodass die Koppelung zum Gesamtkennlinienfeld 5 gegeben ist. Dadurch wird erreicht, dass ein im Mischbereich 6 festgelegter Arbeitspunkt 3 zur Anpassung an die Schweißanwendung in ein Kennlinienfeld 4 verschoben werden kann. Entsprechend der Erfindung wird dabei einer der Einstellwerte konstant gehalten.

Eine derartige Verschiebung des Arbeitspunktes 3 basiert also erfindungsgemäß auf dem Berechnungsverfahren, welches anhand zweier unterschiedlicher Methoden durchgeführt werden kann.

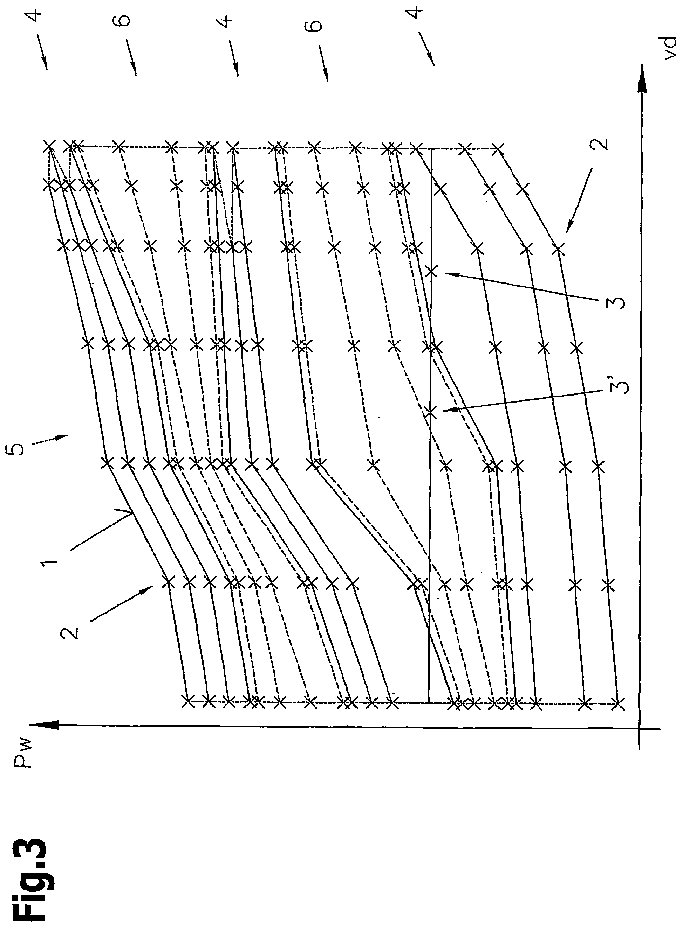

Bei einer ersten Methode werden im Mischbereich 6, welcher ebenso wiederum ein Kennlinienfeld 4 darstellt, zwischen den einzelnen Kennlinienfeldern 4 sogenannte gemischte Kennlinien 1 aufgenommen und abgespeichert, wie in Fig. 3 dargestellt. Entsprechend der Erfindung werden dabei die Stützpunkte 2 der gemischten Kennlinien 1 (strichliert dargestellt) im Mischbereich 6 nach definierten Werten bestimmter Schweißparameter abgespeichert. Dabei entsprechen die Werte exakt jenen Werten, mit welchen die Stützpunkte 2 der Kennlinien 1 der Kennlinienfelder 4, welche einen reinen Schweißprozess betreffen, aufgenommen und abgespeichert wurden.

Die gemischten Kennlinien 1 entstehen dabei derart, dass beispielsweise zwei Schweißprozesse, wie der Puls-Schweißprozess und der Negativ-gepolte-Schweißprozess gemischt werden. Dass heißt, dass nach einer gewissen Anzahl von Zyklen des Puls-Schweißprozesses eine gewisse Anzahl von Zyklen des Negativ-gepolten-Schweißprozesses folgt, auf welchen wiederum Zyklen vom Puls-Schweißprozess folgen usw. Daraus resultieren die Stützpunkte 2 für eine gemischte Kennlinie 1. Wesentlich ist hierbei, dass durch derartige gemischte Kennlinien 1 der Wärmeeintrag Pw in das Werkstück definiert wird, welcher mit Kennlinien 1 eines reinen Schweißprozesses nicht erreicht werden kann.

Somit ist gewährleistet, dass ein zuerst im Mischbereich 6 gewählter Arbeitspunkt 3 derart angepasst werden kann, dass dieser im Kennlinienfeld 4 eines reinen Schweißprozesses liegt. Dabei wird beispielsweise der Wärmeeinbringung Pw in das Werkstück konstant gehalten, indem der Arbeitspunkt 3 in x-Richtung verschoben wird. Dazu ist eine Linie für den konstanten Wärmeeintrag Pw dargestellt, wobei der zuerst gewählte Arbeitspunkt mit 3' und der angepasste Arbeitspunkt, mit welchem die entsprechenden Schweißanwendungen durchgeführt werden, mit 3 bezeichnet wurde.

Durchgeführt wird dies bevorzugt derart, dass für einen Übergangsbereich zwischen einem Kennlinienfeld 4 eines Schweißprozesses und einem Mischbereich 6 im Wesentlichen zwei identische Kennlinien 1 aufgenommen werden. Das heißt, dass die oberste Kennlinie 1 eines Kennlinienfeldes 4 im Wesentlichen der untersten Kennlinie 1 eines Mischbereichs 6 entspricht. Umgekehrt entspricht die obere Kennlinie 1 eines Mischbereichs 6 im Wesentlichen der untersten Kennlinie 1 eines Kennlinienfeldes 4. Dadurch wird erreicht, dass im Wesentlichen eine lückenlose Anpassung des Arbeitspunktes 3 möglich ist. Somit kann der Arbeitspunkt 3 mit konstantem Wärmeeintrag Pw von einem Mischbereich in ein Kennlinienfeld 4 verschoben werden. Das Berechnungsverfahren löst dies dabei derart, dass für eine zwischen Mischbereich 6 und Kennlinienfeld 4 erforderliche Interpolation nicht ein Stützpunkt 2 vom Mischbereich 6 und ein Stützpunkt 2 vom Kennlinienfeld 4 herangezogen wird, sondern dass beispielsweise anstelle des Stützpunktes 2 vom Mischbereich 6 der im Wesentlichen identische Stützpunkt 2 vom Kennlinienfeld 4 verwendet wird. Somit wird das Problem gelöst, dass zwischen einer Kennlinie 1 vom Mischbereich 6 und einer Kennlinie 1 von einem Kennlinienfeld 4 eigentlich keine Interpolation durchgeführt werden kann. Der Grund für die Notwendigkeit zweier im Wesentlichen identischer Kennlinien 1 liegt hierbei darin, dass zwar die im Wesentlichen identischen Stützpunkte 2 nahezu dieselbe Wirkung ergeben, jedoch die Vielzahl der Schweißparameter auf völlig unterschiedliche Schweißprozesse abgestimmt sind.

Somit kann im Übergangsbereich vom Mischbereich 6 in das Kennlinienfeld 4 und umgekehrt das Berechnungsverfahren im Wesentlichen exakt durchgeführt werden, sodass stets gewährleistet ist, dass die Anforderungen an die Schweißverbindung erfüllt werden.

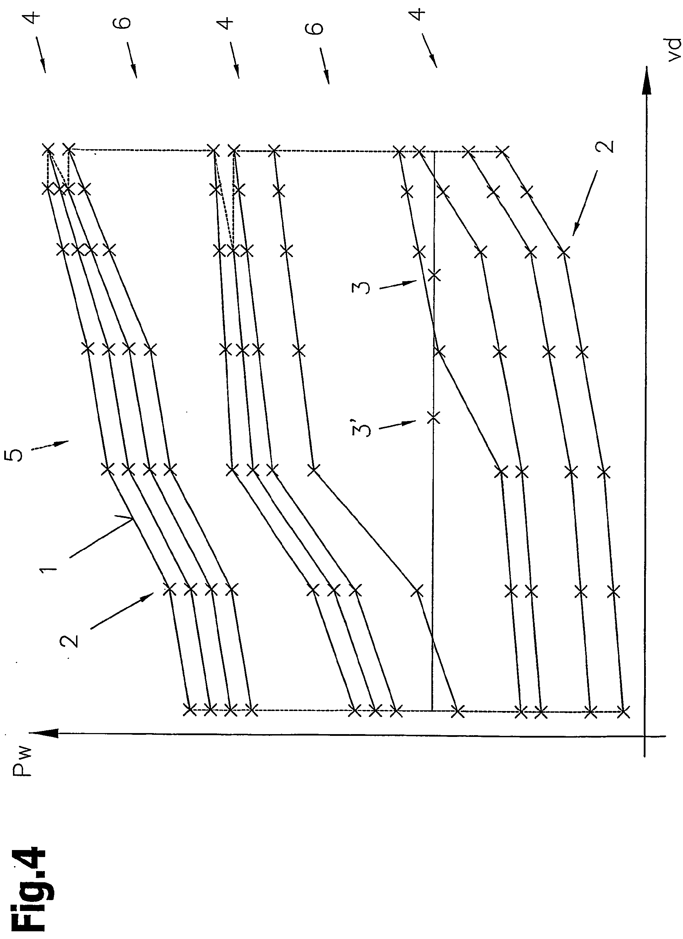

Bei der zweiten Methode für das Berechnungsverfahren ist nun vorgesehen, dass im Mischbereich 6 keine Kennlinien 1 aufgenommen und abgespeichert werden, sondern der in diesem Bereich eingestellte Arbeitspunkt 3 individuell aus den Stützpunkten 2 der Kennlinienfelder 4 ermittelt wird, wie aus Fig. 4 ersichtlich ist. Zur Erzielung der Einstellwerte für den Arbeitspunkt 3 wird dieser aus zumindest zwei Stützpunkten 2 aus zumindest zwei Kennlinienfeldern 4 zusammengemischt. Demzufolge wird also der Arbeitspunkt 3 durch einen Misch-Schweißprozess aus zumindest zwei reinen Schweißprozessen gebildet, welcher beispielsweise abwechselnd aus zwei Zyklen Puls-Schweißprozess und vier Zyklen Negativ-gepolten-Schweißprozess gebildet wird. Durch eine derartige Zyklenmischung kann der Wärmeeintrag Pw in das Werkstück entsprechend exakt an den Einstellwert angepasst werden. Diese Anpassung wird entsprechend vom erfindungsgemäßen Berechnungsverfahren durchgeführt. Da zu den Stützpunkten 2 erfindungsgemäß der dazugehörige Wärmeeintrag Pw in das Werkstück hinterlegt ist, kann das Berechnungsverfahren aus zumindest zwei Stützpunkten 2 den eingestellten Arbeitspunkt 3 ermitteln. Ebenso kann das Berechnungsverfahren aus zwei Stützpunkten 2 eines Kennlinienfeldes 4 einen Hilfspunkt durch Interpolation ermitteln, welcher einen entsprechenden Zwischenwert für den Wärmeeintrag Pw in das Werkstück hat. Das heißt, dass der Arbeitspunkt 3 beispielsweise auch durch einen Hilfspunkt und einem Stützpunkt 2 oder aus zwei Hilfspunkten zusammengemischt werden kann. Auf diese Weise kann der Einstellwert exakt ermittelt werden.

Der Schweißprozess läuft dabei derart ab, dass abwechselnd mit den Stützpunkten 2 bzw. Hilfspunkten geschweißt wird. Die entsprechende Anzahl, wann zwischen den Stützpunkten 2 bzw. Hilfspunkten umgeschaltet wird, ermittelt das Berechnungsverfahren, sodass der Schweißprozess entsprechend den Einstellwerten durchgeführt wird. Demzufolge entspricht also der abwechselnde Einsatz der Stützpunkte 2 bzw. Hilfspunkte jeweils einem Schweißzyklus. Somit besteht ein Schweißzyklus beispielsweise aus abwechselnd zwei Zyklen Puls-Schweißprozess und vier Zyklen Negativ-gepolten-Schweißprozess.

Bei den Mischbereichen 6 sei noch allgemein darauf hingewiesen, dass die zwei beschriebenen Methoden auch kombiniert werden können bzw. Teile einer Methode bei der anderen Methode eingesetzt werden können. So ist es bei jeder Methode möglich, dass der in einem Mischbereich 6 eingestellter Arbeitspunkt 3 aus zwei Stützpunkten 2 ermittelt wird, welche aus einem Kennlinienfeld 4 stammen.

Da nun im Wesentlichen nur auf die Konstanthaltung des Wärmeeintrags Pw in das Werkstück eingegangen wurde, sei darauf hingewiesen, dass dies auch analog zur Konstanthaltung der Drahtvorschubgeschwindigkeit vd angewandt werden kann. Erfindungsgemäß sind zwar die Stützpunkte 2 bereits bei jeweils einer mittleren konstanten Drahtvorschubgeschwindigkeit vd aufgenommen worden, aber dennoch ist selbstverständlich für die dazwischen liegenden Werte das Berechnungsverfahren erforderlich.

Allgemein sei dazu noch erwähnt, dass zur Interpolation des Arbeitspunktes 3 bzw. von Hilfspunkten der Wert für den Wärmeeintrag Pw in das Werkstück derart konstant gehalten wird, indem die Kurvenformen bestimmter Schweißparameter angepasst werden. Das heißt, dass beispielsweise der Verlauf des Schweißstroms Is - also dessen Kurvenform - derart angepasst wird, dass eine erhöhte Abschmelzleistung des Schweißdrahtes erreicht wird und gleichzeitig der Wert für den Wärmeeintrag Pw nicht verändert wird.

Grundsätzlich sei auch noch darauf hingewiesen, dass das Berechnungsverfahren zur Ermittlung des Arbeitspunktes 3 auch Faktoren wie das sogenannte "Blitzen" bei einem Schweißprozess oder die Geräusche des Lichtbogens berücksichtigt. Diese Faktoren werden insbesondere derart berücksichtigt, indem das Berechnungsverfahren auf Differenz bestimmter Schweißparameter der Stützpunkte 2 Rücksicht nimmt. Sollte eine Differenz einen definierten Schwellwert überschreiten, wird vom Berechnungsverfahren ein anderer Stützpunkt 2 bzw. Hilfspunkt zur Ermittlung des Arbeitspunktes 3 bzw. dessen Anpassung herangezogen.

Allgemein sei noch zum Gesamtkennlinienfeld 5 erwähnt, dass dieses zumindest pro Material des Werkstücks aufgenommen und abgespeichert wird. Gegebenenfalls kann dies noch feiner unterteilt werden, sodass sich die Anzahl der Gesamtkennlinienfelder 5 erhöht.

Ein weiterer wesentlicher Aspekt der Erfindung ist aber auch, dass der Wärmeeintrag Pw in das Werkstück zu jedem Stützpunkt 2 hinterlegt ist. Dadurch wird das Berechnungsverfahren stark vereinfacht, da dieses direkt den Wert für den Wärmeeintrag Pw in das Werkstück heranziehen kann. Dementsprechend wird dadurch der Aufwand zum Aufnehmen und Abspeichern der Stützpunkte 2 erhöht, wobei dies durch den wesentlich bedeutenderen Vorteil für den Anwender nicht relevant ist.

Der Wert für den Wärmeeintrag Pw in das Werkstück muss entsprechend aus der Gesamtleistung des Schweißprozesses, welche von einem Schweißgerät für den Schweißprozess anhand der Schweißspannung und des Schweißstroms zur Verfügung gestellt wird, ermittelt werden. Dass heißt, dass von der Gesamtleistung die Verlustleistung in den Schweißdraht, die Verlustleistung durch Strahlung in die Umgebung und die Verlustleistung, welche vom Werkstück aufgenommen wird, abgezogen werden muss. Dabei ist des Weiteren zu berücksichtigen, dass ein Teil der Verlustleistung in den Schweißdraht wieder dem Schmelzbad bzw. dem Werkstück zugeführt wird. Entsprechend sind diese Verlustleistungen für jeden Schweißprozess unterschiedlich, sodass entsprechend auch der Wärmeeintrag Pw in das Werkstück unterschiedlich ist. Daher wird insbesondere durch Kombinieren bzw. Mischen der unterschiedlichen Schweißprozesse, wie dem Puls-Schweißprozess, dem CMT-Schweißprozess und dem Negativ-gepolten-Schweißprozess, das Gesamtkennlinienfeld 5 ermöglicht, in welchem der Arbeitspunkt 3 anhand der zwei Einstellwerte an nahezu jede beliebige Schweißanwendung angepasst werden kann. Dies ist insbesondere darauf zurückzuführen, dass die Einstellwerte unabhängig voneinander einstellbar sind.

Der Einstellwert für den Wärmeeintrag Pw in das Werkstück ist also in gewisser Weise direkt vom Schweißstrom Is abhängig. Daher ist es auch möglich, dass entsprechende Korrekturfaktoren zu jedem Stützpunkt 2 hinterlegt werden, sodass der Anwender wie gewohnt den Schweißstrom Is einstellen kann. Entsprechend wird dabei der Wert für den Wärmeeintrag Pw in das Werkstück an der Bedienfront angezeigt.

## Patentansprüche

1. Verfahren zur Regelung eines Schweißgerätes mit einer abschmelzenden Elektrode, wobei die für einen Schweißprozess benötigten Werte der Schweißparameter in einer Speichervorrichtung hinterlegt werden und in Form von sogenannten Kennlinien (1) durch zumindest einen Stützpunkt (2) pro Kennlinie (1) abgespeichert werden, **dadurch gekennzeichnet, dass** ein Arbeitspunkt (3) durch einen Wert für den Wärmeeintrag (Pw) in ein Werkstück und einen Wert für die Drahtvorschubgeschwindigkeit (vd) eingestellt wird, wobei bei Anpassung eines dieser Werte an eine Schweißanwendung der weitere Wert durch ein Berechnungsverfahren konstant gehalten wird und das Berechnungsverfahren darauf aufgebaut wird, dass pro Schweißprozess mehrere zueinander kompatible Kennlinien (1) jeweils zu einem Kennlinienfeld (4) zusammengefasst werden und die Schweißparameter aller Stützpunkte (2) der Kennlinien (1) der Kennlinienfelder (4) nach definierten Werten bestimmter Schweißparameter abgespeichert werden.

2. Verfahren nach Anspruch 1, **dadurch gekennzeichnet, dass** die Schweißparameter der Stützpunkte (2) für unterschiedliche Werte für den Wärmeeintrag (Pw) in das Werkstück bei jeweils einem konstanten Wert der Drahtvorschubgeschwindigkeit (vd) abgespeichert werden.

3. Verfahren nach Anspruch 1 oder 2, **dadurch gekennzeichnet dass** die Kennlinienfelder (4) aus einem Puls-Schweißprozess, einem CMT-Schweißprozess und einem Negativ-gepolten-Schweißprozess gebildet werden.

4. Verfahren nach einem der Ansprüche 1 bis 3, **dadurch gekennzeichnet, dass** die Kennlinienfelder (4) der einzelnen Schweißprozesse zu einem gemeinsamen Gesamtkennlinienfeld (5) gekoppelt werden.

5. Verfahren nach einem der Ansprüche 1 bis 4, **dadurch gekennzeichnet, dass** mit dem Berechnungsverfahren ein Hilfspunkt aus mehreren Stützpunkten (2) ermittelt wird.

6. Verfahren nach einem der Ansprüche 1 bis 5, **dadurch gekennzeichnet, dass** zur Koppelung der Kennlinienfelder (4) zwischen diesen jeweils mehrere aus zwei Schweißprozessen zusammengesetzte gemischte Kennlinien (1) in Form von Stützpunkten (2) in einem Mischbereich (6) abgespeichert werden, wobei der Mischbereich (6) jeweils durch ein Kennlinienfeld (4) gebildet wird.

7. Verfahren nach Anspruch 6, **dadurch gekennzeichnet, dass** zur Konstanthaltung eines Wertes das Berechnungsverfahren derart durchgeführt wird, dass für eine Interpolation aus jeder Kennlinie (1) eines Kennlinienfeldes (4) geeignete Stützpunkte (2) gewählt werden.

8. Verfahren nach Anspruch 6 oder 7, **dadurch gekennzeichnet, dass** jene gemischten Kennlinien (1), welche die obere und untere Grenze des Kennlinienfeldes (4) bilden, im Wesentlichen den Kennlinien (1) entsprechen, durch welche die obere und untere Kennlinie (1) des oberhalb und unterhalb angeordneten Kennlinienfeldes (4) gebildet wird.

9. Verfahren nach einem der Ansprüche 1 bis 5, **dadurch gekennzeichnet, dass** zur Koppelung der Kennlinienfelder (4) zwischen diesen jeweils Mischbereiche (6) definiert werden und zur Konstanthaltung eines Wertes das Berechnungsverfahren derart durchgeführt wird, dass der in den Mischbereichen (6) eingestellte Arbeitspunkt (3) aus zumindest zwei Stützpunkten (2) aus jeweils einem unterschiedlichen Kennlinienfeld (4) ermittelt wird.

10. Verfahren nach einem der Ansprüche 1 bis 5, **dadurch gekennzeichnet, dass** zur Koppelung der Kennlinienfelder (4) zwischen diesen jeweils Mischbereiche (6) definiert werden und zur Konstanthaltung eines Wertes das Berechnungsverfahren derart durchgeführt wird, dass der in den Mischbereichen (6) eingestellte Arbeitspunkt (3) aus zumindest zwei Stützpunkten (2) eines Kennlinienfeldes (4) ermittelt wird.

11. Verfahren nach Anspruch 9 oder 10, **dadurch gekennzeichnet, dass** aus den Stützpunkten (2) der Wert für den Wärmeeintrag (Pw) in das Werkstück der Arbeitspunkt (3) ermittelt wird, indem aus den Stützpunkten (2) eine definierte Anzahl von Schweißzyklen berechnet wird.

12. Verfahren nach einem der Ansprüche 1 bis 11, **dadurch gekennzeichnet, dass** der Wert für den Wärmeeintrag (Pw) in das Werkstück pro Stützpunkt (2) ermittelt und abgespeichert wird.

13. Verfahren nach Anspruch 12, **dadurch gekennzeichnet, dass** der Wert für den Wärmeeintrag (Pw) in das Werkstück aus einer Gesamtleistung, welche von einem Schweißgerät für den Schweißprozess anhand einer Schweißspannung und einem Schweißstrom zur Verfügung gestellt wird, ermittelt wird.

14. Verfahren nach einem der Ansprüche 1 bis 13, **dadurch gekennzeichnet, dass** der Wert für den Wärmeeintrag (Pw) in das Werkstück durch Änderung von Kurvenformen bestimmter Schweißparameter angepasst wird.

## Claims

1. A method for controlling a welder with a consumable electrode, wherein the values of the welding parameters required for a welding process are stored in a memory device and saved in the form of so-called characteristic curves (1) by at least one support point (2) per characteristic curve (1), **characterized in that** a working point (3) is adjusted by a value for the heat input (Pw) into a workpiece and a value for the wire feed speed (vd), wherein, when adapting one of these values to a welding application, the other value is kept constant by a calculation method, and the calculation method is designed such that several characteristic curves (1) which are compatible with one another are each combined to a characteristic curve field (4) per welding process, and that the welding parameters of all support points (2) of the characteristic curves (1) of the characteristic curve fields (4) are stored according to defined values of specific welding parameters.

2. A method according to claim 1, **characterized in that** the welding parameters of the support points (2) for different values of the heat input (Pw) into the workpiece are each stored at a constant value of the wire feed speed (vd).

3. A method according to claim 1 or 2, **characterized in that** the characteristic curve fields (4) are each formed by a pulse welding process, a CMT welding process and a negatively poled welding process.

4. A method according to any one of claims 1 to 3, **characterized in that** the characteristic curve fields (4) of the individual welding processes are coupled to a common overall characteristic curve field (5).

5. A method according to any one of claims 1 to 4, **characterized in that** an auxiliary point is determined from several support points (2) by the calculation method.

6. A method according to any one of claims 1 to 5, **characterized in that**, for coupling the characteristic curve fields (4), several characteristic curves (1) each composed of two welding processes are stored between the same in the form of support points (2) in a mixed region (6), said mixed region (6) being each formed by a characteristic curve field (4).

7. A method according to claim 6, **characterized in that**, for keeping a value constant, the calculation method is performed in a manner that suitable support points (2) are selected from each characteristic curve (1) of a characteristic curve field (4) for interpolation.

8. A method according to claim 6 or 7, **characterized in that** those mixed characteristic curves (1) which form the upper and lower limits of the characteristic curve field (4) substantially correspond to the characteristic curves (1) by which the upper and lower characteristic curves (1) of the characteristic curve field (4) arranged thereabove or therebelow are formed.

9. A method according to any one of claims 1 to 5, **characterized in that**, for coupling the characteristic curve fields (4), mixed regions (6) are each defined between the former and, for keeping a value constant, the calculation method is performed in a manner that the working point (3) set in the mixed regions (6) is determined from at least two support points (2) each of a different characteristic curve field (4).

10. A method according to any one of claims 1 to 5, **characterized in that**, for coupling the characteristic curve fields (4), mixed regions (6) are each defined between the same and, for keeping a value constant, the calculation method is performed in a manner that the working point (3) set in the mixed regions (6) is determined from at least two support points (2) of one characteristic curve field (4).

11. A method according to claim 9 or 10, **characterized in that** from the support points (2) the value for the heat input (Pw) into the workpiece the working point (3) is determined by calculating a defined number of welding cycles from the support points (2).

12. A method according to any one of claims 1 to 11, **characterized in that** the value for the heat input (Pw) into the workpiece is determined and stored for each support point (2).

13. A method according to claim 12, **characterized in that** the value for the heat input (Pw) into the workpiece is determined from a total output provided by a welder for the welding process, based on a welding voltage and a welding current.

14. A method according to any one of claims 1 to 13, **characterized in that** the value for the heat input (Pw) into the workpiece is adapted by changing the shapes of the curves of specific welding parameters.

## Revendications

1. Procédé pour la régulation d'un appareil de soudure avec une électrode fusible, les valeurs des paramètres de soudure nécessaires pour un processus de soudure étant enregistrées dans un dispositif de stockage et sont enregistrées, sous la forme de ce qu'on appelle des courbes caractéristiques (1), à l'aide d'au moins un point d'appui (2) par courbe caractéristique (1), **caractérisé en ce qu'**un point de travail (3) est réglé par une valeur pour l'apport thermique (Pw) dans une pièce et une valeur pour la vitesse d'avance du fil (vd), lors de l'adaptation d'une de ces valeurs à une application de soudure, l'autre valeur étant maintenue constante à l'aide d'un procédé de calcul et le procédé de calcul étant conçu de façon à ce que, par processus de soudure, plusieurs courbes caractéristiques (1) compatibles entre elles soient regroupées en un champ de courbes caractéristiques (4) et les paramètres de soudure de tous les points d'appui (2) des courbes caractéristiques (1) des champs de courbes caractéristiques (4) soient enregistrés selon des valeurs définies de paramètres de soudure déterminés.

2. Procédé selon la revendication 1, **caractérisé en ce que** les paramètres de soudure des points d'appui (2) sont enregistrés pour différentes valeurs pour l'apport thermique (Pw) dans la pièce, dans le cas d'une valeur constante de la vitesse d'avance du fil (vd).

3. Procédé selon la revendication 1 ou 2, **caractérisé en ce que** les champs de courbes caractéristiques (4) sont constitués d'un processus de soudure par impulsions, d'un processus de soudure CMT et d'un processus de soudure à polarité négative.

4. Procédé selon l'une des revendications 1 à 3, **caractérisé en ce que** les champs de courbes caractéristiques (4) des différents processus de soudure sont couplés en un champ de courbes caractéristiques (5) commun.

5. Procédé selon l'une des revendications 1 à 4, **caractérisé en ce que**, avec le procédé de calcul, un point auxiliaire est déterminé à partir de plusieurs points d'appui (2).

6. Procédé selon l'une des revendications 1 à 5, **caractérisé en ce que**, pour le couplage des champs de courbes caractéristiques (4) entre eux, plusieurs courbes caractéristiques (1) mélangées constituées chacune de deux processus de soudure sont enregistrées sous la forme de points d'appui (2) dans une zone de mélange (6), la zone de mélange (6) étant constituée par un champ de courbes caractéristiques (4).

7. Procédé selon la revendication 6, **caractérisé en ce que**, pour le maintien constant d'une valeur, le procédé de calcul est appliqué de façon à ce que, pour une interpolation à partir de chaque courbe caractéristique (1) d'un champ de courbes caractéristiques (4), des points d'appui (2) appropriés sont choisis.

8. Procédé selon la revendication 6 ou 7, **caractérisé en ce que** les courbes caractéristiques (1) qui constituent les limites supérieure et inférieure du champ de courbes caractéristiques (4) correspondent globalement aux courbes caractéristiques (1) à l'aide desquelles les courbes caractéristiques (1) supérieure et inférieure du champ de courbes caractéristiques (4) situées au-dessus et en dessous sont formées.

9. Procédé selon l'une des revendications 1 à 5, **caractérisé en ce que**, pour le couplage des champs de courbes caractéristiques (4) entre eux, des zones de mélanges (6) sont définies et, pour le maintien constant d'une valeur, le procédé de calcul est appliqué de façon à ce que le point de travail (3) réglé dans les zones de mélange (6) soit déterminé à partir d'au moins deux points d'appui (2) provenant chacun d'un champ de courbes caractéristique (4) différent.

10. Procédé selon l'une des revendications 1 à 5, **caractérisé en ce que**, pour le couplage des champs de courbes caractéristiques (4) entre eux, des zones de mélanges (6) sont définies et, pour le maintien constant d'une valeur, le procédé de calcul est appliqué de façon à ce que le point de travail (3) réglé dans les zones de mélange (6) soit déterminé à partir d'au moins deux points d'appui (2) provenant du même champ de courbes caractéristiques (4).

11. Procédé selon l'une des revendications 9 ou 10, **caractérisé en ce que**, à partir des points d'appui (2), la valeur pour l'apport thermique (Pw) dans la pièce, le point de travail (3) est déterminé en calculant un nombre défini de cycles de soudure à partir des points d'appui (2).

12. Procédé selon l'une des revendications 1 à 11, **caractérisé en ce que** la valeur pour l'apport thermique (Pw) dans la pièce est déterminée et enregistrée pour chaque point d'appui (2).

13. Procédé selon la revendication 12, **caractérisé en ce que** la valeur pour l'apport thermique (Pw) dans la pièce est déterminée à partir d'une puissance totale, qui est fournie par un appareil de soudure pour le processus de soudure à l'aide d'une tension de soudure et d'un courant de soudure.

14. Procédé selon l'une des revendications 1 à 13, **caractérisé en ce que** la valeur pour l'apport thermique (Pw) dans la pièce est adaptée en modifiant les formes de courbes de paramètres de soudure déterminés.
